# EUROPEAN PATENT APPLICATION

(11) **EP 4 592 458 A1**
(43) Date of publication of application: **30.07.2025**
(21) Application number: 23880096.5
(22) Date of filing: 10.10.2023
(51) Int. Cl.: E02F 9/20, E02F 9/08, E02F 9/22, B60L 50/51, B60L 50/53, B60K 1/04, B60K 6/20, B60K 17/04

(54) **ELECTRIC EXCAVATOR**

(30) Priority: 17.10.2022 KR 20220133493
(71) Applicant: HD Hyundai Infracore Co., Ltd., Incheon 22502 (KR)
(72) Inventor: SEO, Hyunjae, Ansan-si, Gyeonggi-do 15484 (KR)
(74) Representative: Isarpatent
(86) International application number: PCT/KR2023/015501
(87) International publication number: WO 2024/085517

(57) **Abstract**

The electric excavator according to the present disclosure includes a lower traveling body and a rotating platform coupled to the lower traveling body to be rotatable. The electric excavator includes an engine disposed in the lower traveling body, a generator disposed in the lower traveling body to generate electricity by using the engine, a first battery disposed in the lower traveling body and charged by the generator, a traveling motor disposed in the lower traveling body, to which a power source is supplied to move the lower traveling body, a rotating motor disposed in the rotating platform to rotate the rotating platform, and a working motor disposed in the rotating platform to operate a front working device including a boom and an arm.

## Description

### [TECHNICAL FIELD]

The present disclosure relates to a construction machine, and more specifically relates to an electric excavator driven by electrical energy.

### [BACKGROUND ART]

In general, a construction machine such as an excavator is configured so that a rotating platform can freely rotate on a lower traveling body, and a front work device of the rotating platform usually includes a boom, an arm, and a bucket. A work of the construction machine is carried out in such a manner that the work device such as the boom, the arm, and the bucket is controlled through an actuator such as a hydraulic cylinder.

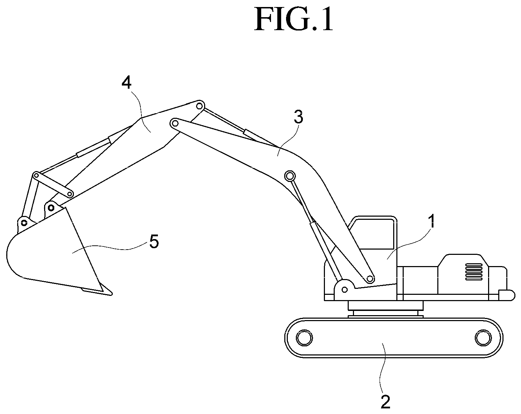

A typical excavator as the construction machine is illustrated in FIG. 1. As illustrated, a general excavator includes a lower traveling body 2 that drives the excavator to travel, and a rotating platform 1 coupled to the lower body 2 to be rotatable, and a front working device mounted on the rotating platform 1 includes a boom 3 pivotally coupled to the rotating platform 1, an arm 4 pivotally coupled to the boom 3, and a bucket 5 pivotally coupled to an end portion to carry out excavation or hold soil, rocks, or the like.

A driver's seat of the rotating platform 1, called a cabin, is equipped with a driving lever for manipulating forward and backward traveling of the lower traveling body 2, and a joystick for manipulating the rotating platform 1 and the front working device.

In order to obtain driving power, this excavator is usually equipped with an engine such as a diesel engine, and power of this engine is used to drive a hydraulic pump, and a hydraulic oil ejected from the hydraulic pump is supplied to a hydraulic actuator of a hydraulic motor, a hydraulic cylinder, or the like. In this manner, the power rotates a traveling crawler or tires, or operates each working element such as the boom 3, arm 4, and bucket 5.

Since the excavator known in this way is equipped with the engine such as the diesel engine, the excavator has an advantage in that the excavator cab freely carry out work without being restricted by a work location.

However, fossil fuels such as diesel have been increasingly exhausted, and have caused air pollution. Therefore, there is an urgent need for eco-friendly alternative energy. Furthermore, since the fossil fuels are expensive, there is a disadvantage in that operating costs inevitably increase due to high fuel consumption caused by a special nature of heavy equipment. As one solution for this disadvantage, an electric excavator using electric energy has been introduced.

In a case of this electric excavator, unlike the excavator driven by the diesel engine, the hydraulic pump is not driven by the engine. Therefore, an efficient layout structure suitable for the electric excavator is required, and a method for increasing efficiency of battery capacity is required.

### [DETAILED DESCRIPTION OF INVENTION]

### [TECHNICAL PROBLEMS]

The present disclosure aims to provide an electric excavator driven by electric energy, having an efficient layout structure, effectively cooling an engine and an electric power system, and achieving improved safety.

### [TECHNICAL SOLUTION]

According to the present disclosure, there is provided an electric excavator including a lower traveling body and a rotating platform coupled to the lower traveling body to be rotatable. The electric excavator includes an engine disposed in the lower traveling body, a generator disposed in the lower traveling body to generate electricity by using the engine, a first battery disposed in the lower traveling body and charged by the generator, a traveling motor disposed in the lower traveling body, to which a power source is supplied to move the lower traveling body, a rotating motor disposed in the rotating platform to rotate the rotating platform, and a working motor disposed in the rotating platform to operate a front working device including a boom and an arm.

In addition, the power source is supplied from the first battery to the rotating motor or the working motor.

In addition, the electric excavator further includes a first power distribution unit disposed in the lower traveling body to supply electric power between the first battery and the traveling motor.

In addition, the electric excavator further includes a front axle disposed on a front side of the lower traveling body, front wheels disposed on both sides of the front axle, a rear axle disposed on a rear side of the lower traveling body, and rear wheels disposed on both sides of the rear axle. The front wheels and the rear wheels are rotated by driving power of the traveling motor.

In addition, the electric excavator further includes a gearbox connected to the traveling motor.

In addition, the electric excavator further includes a second battery disposed in the rotating platform.

In addition, the electric excavator further includes a second power distribution unit disposed in the rotating platform to supply electric power to the rotating motor and the working motor.

In addition, the electric excavator further includes a slip ring disposed between the first power distribution unit and the second power distribution unit to supply electric power between the first power distribution unit and the second power distribution unit.

In addition, the electric excavator further includes a hydraulic pump disposed in the rotating platform and driven by the working motor.

In addition, a hydraulic oil is supplied from the hydraulic pump to a hydraulic actuator of the front working device to operate the front working device.

In addition, the electric excavator further includes a charging port for charging the first battery from an external power source.

In addition, the electric excavator further includes a second battery disposed in the rotating platform. The first battery and the second battery are charged from the external power source by the charging port.

In addition, the charging port is disposed in the lower traveling body.

In addition, the electric excavator further includes an inclined surface portion disposed on the other side surface opposite to a cabin on the rotating platform and inclined in a direction away from the cabin.

In addition, the electric excavator further includes a counterweight including an inclined surface portion disposed on a rear side of the rotating platform and inclined in the direction away from the cabin.

In addition, the lower traveling body further includes a lower frame, the first battery is disposed on one side of the lower frame, and the engine is disposed on the other side opposite to the first battery in the lower frame.

### [EFFECT OF INVENTION]

Therefore, according to the present disclosure, there is provided an electric excavator having an efficient layout structure as an excavator driven by electric energy.

In addition, according to the present disclosure, there is provided an electric excavator that effectively cools an engine and an electric power system.

In addition, according to the present disclosure, there is provided an electric excavator in which an operator has a wider field of vision to improve safety.

### [BRIEF DESCRIPTION OF THE DRAWING]

FIG. 1 is a view illustrating a general excavator.
FIG. 2 is a schematic view of a main configuration of an electric excavator according to the present disclosure.
FIG. 3 is a plan view of a lower traveling body in the present disclosure, and illustrates a main configuration of the lower traveling body.
FIG. 4 is a plan view of a rotating platform in the present disclosure, and illustrates a main configuration of the rotating platform.
FIG. 5 is a view illustrating a location where an additional battery may be mounted on the lower traveling body of the present disclosure.
FIG. 6 is a view illustrating a location where an additional battery may be mounted on the rotating platform of the present disclosure.
FIG. 7 is a view illustrating a battery and an electric power supply line which are disposed in the rotating platform and the lower traveling body in the present disclosure.
FIG. 8 is a rear view of the electric excavator according to the present disclosure.
FIG. 9 is a front view of the electric excavator according to the present disclosure.

### [BEST MODE FOR CARRYING OUT THE INVENTION]

Advantages and features of the present disclosure, and a method for achieving the advantages and the features of the present disclosure will become apparent by referring to embodiments described in detail below together with the accompanying drawings. However, the present disclosure is not limited to the embodiments described below, and may be implemented in various different forms. The present embodiments are provided only to make the disclosure of the present disclosure complete and to fully inform those skilled in the art to which the present disclosure pertains. The present disclosure is defined only by the scope of the appended claims. Therefore, in some embodiments, well-known process steps, well-known device structures, and well-known techniques are not specifically described in order to avoid ambiguity in interpretation of the present disclosure. The same reference numerals refer to the same components throughout the specification.

In order to clearly represent various layers and regions in the drawings, thicknesses are enlarged and illustrated. The same reference numerals are assigned to similar elements in the drawing throughout the specification. When it is described that an element such as a layer, a membrane, a region, and a plate is located "above" another element, this description includes not only a case where an element is located "directly above" another element, but also a case where other elements are present therebetween. Conversely, when it is described that a certain element is located "directly above" another element, this description means that other elements are not present therebetween. In addition, when it is described that an element such as a layer, a membrane, a region, and a plate is located "below" another element, this description includes not only a case where an element is "directly below" another element, but also a case where other elements are present therebetween. Conversely, when it is described that a certain element is located "directly below" another element, this description means that other elements are not present therebetween.

Spatially relative terms such as "below ", "beneath ", "lower ", "above ", "upper " may be used to easily describe a relationship between one element or one component and other elements or other components, as illustrated in the drawings. It should be understood that the spatially relative terms include mutually different directions of elements when used or operated in addition to directions illustrated in the drawings. For example, when an element illustrated in the drawings is flipped over, an element described as "below " or "beneath " another element may be located "above" another element. Therefore, the exemplary terms such as "below" and "beneath " may include both upward and downward directions. The elements may also be oriented in other directions, and accordingly, the spatially relative terms may be interpreted depending on orientations.

When it is described in the present specification that an element is connected to another element, this description includes not only a case where both are directly connected, but also a case where both are connected via other elements. In addition, when it is described that a certain element includes a certain component, this description does not exclude other components, and means that other components may be further included, unless there is specific description to the contrary.

In the present specification, although terms such as first, second, and third may be used to describe various components, these components are not limited by the terms. The terms are used to distinguish one component from another component. For example, without departing from the scope of the present disclosure, a first component may be referred to as a second component, a third component, or the like, and similarly, the second component or the third component may be interchangeably referred to.

Unless otherwise defined, all terms (including technical and scientific terms) used in the present specification may be used in a commonly understood sense by those skilled in the art to which the present disclosure pertains. In addition, terms defined in commonly used dictionaries shall not be ideally or excessively interpreted unless explicitly specifically defined.

Hereinafter, an electric excavator according to preferred embodiments of the present disclosure will be described in detail with reference to the accompanying drawings.

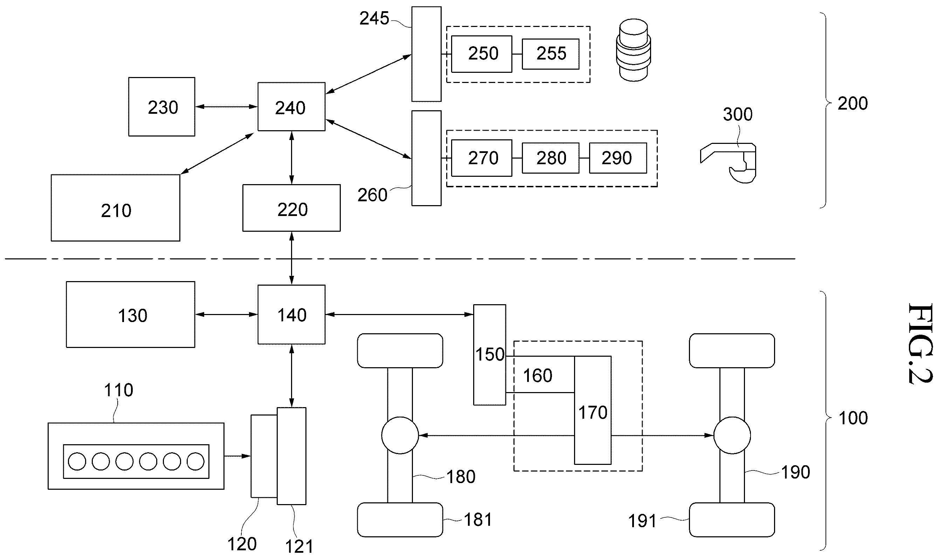

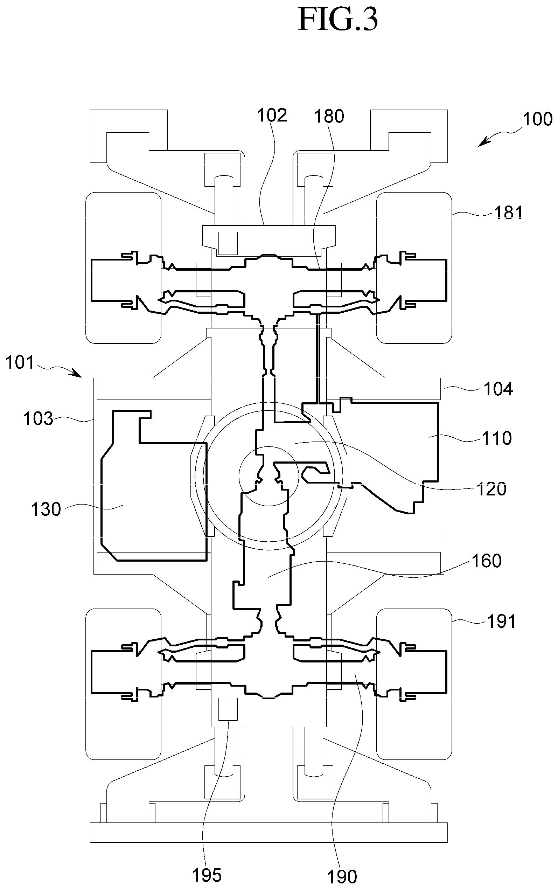

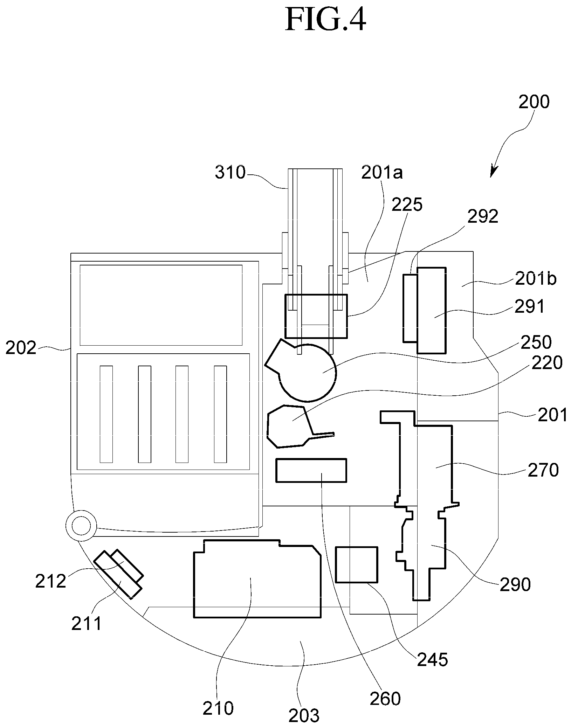

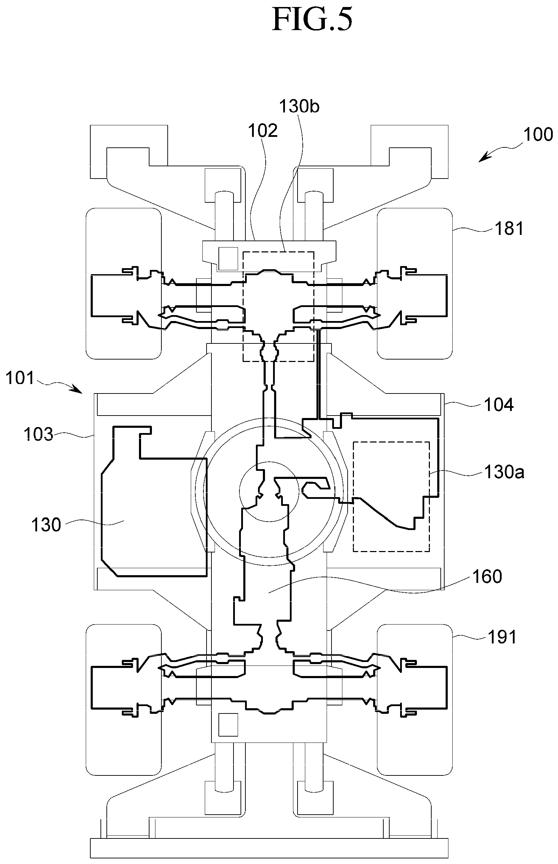

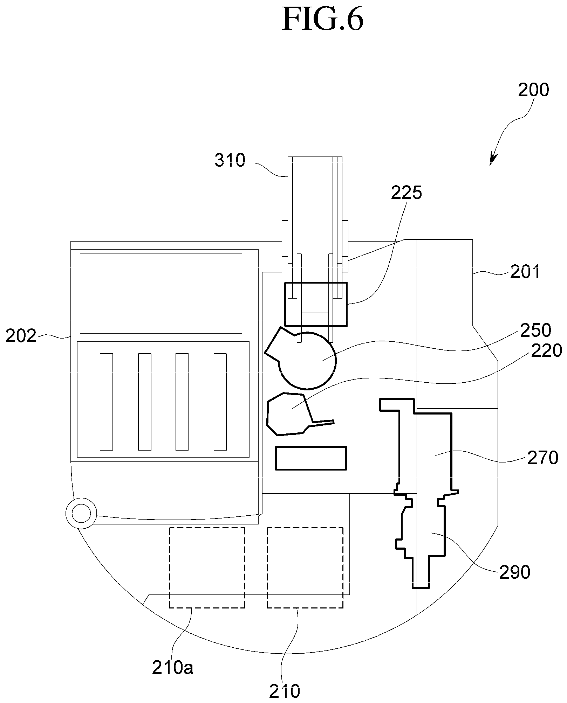

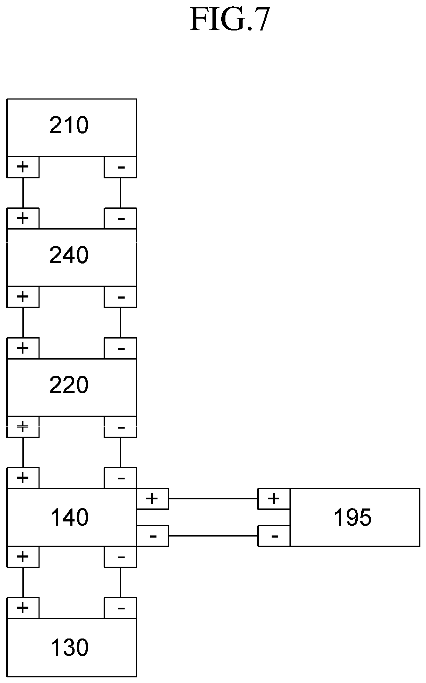

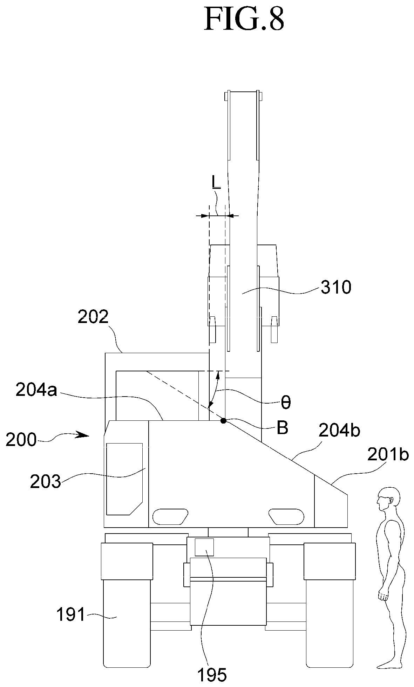

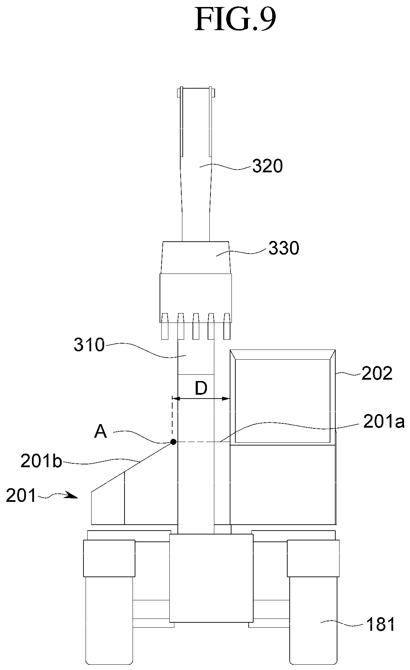

FIG. 2 is a schematic view of a main configuration of an electric excavator according to the present disclosure. FIG. 3 is a plan view of a lower traveling body in the present disclosure, and is a view illustrating a main configuration of the lower traveling body. FIG. 4 is a plan view of a rotating platform in the present disclosure, and is a view illustrating a main configuration of the rotating platform. FIG. 5 is a view illustrating a location where an additional battery may be mounted on the lower traveling body in the present disclosure. FIG. 6 is a view illustrating a location where an additional battery may be mounted on the rotating platform in the present disclosure. FIG. 7 is a view illustrating a battery and an electric power supply line which are disposed in the rotating platform and the lower traveling body in the present disclosure. FIG. 8 is a rear view of the electric excavator according to the present disclosure. FIG. 9 is a front view of the electric excavator according to the present disclosure.

### 1. Overall Layout

The electric excavator according to the present disclosure includes a lower traveling body 100 and a rotating platform 200 coupled to the lower traveling body 100 to be rotatable. The electric excavator includes an engine 110 disposed in the lower traveling body 100, a generator 120 disposed in the lower traveling body 100 to generate electricity by using the engine 110, a first battery 130 charged by the generator 120, a traveling motor 160 disposed in the lower traveling body 100 to move the lower traveling body 100, a rotating motor 250 disposed in the rotating platform 200 to rotate the rotating platform 200, and a working motor 270 disposed in the rotating platform 200 to operate a front working device 300 including a boom 310 and an arm 320.

The lower traveling body 100 is disposed in a lower part of the rotating platform 200, and includes a lower frame 101 forming the lower traveling body 100, and front and rear wheels 181 and 191 disposed on both sides of the lower frame 101.

As illustrated in FIGS. 2 and 3, the engine 110, the generator 120, the first battery 130, a first power distribution unit 140, a first inverter 150, the traveling motor 160, a gearbox 170, and the like are disposed inside the lower frame 101 of the lower traveling body 100.

The lower frame 101 of the lower traveling body 100 includes an intermediate frame 102, a first frame 103 disposed on a left side of the intermediate frame 102, and a second frame 104 disposed on a right side of the intermediate frame 101.

The intermediate frame 102 of the lower frame 101 extends in a forward-rearward direction of the lower traveling body 100. A front axle 180 is disposed on a front side of the intermediate frame 102, and a rear axle 190 is disposed on a rear side of the intermediate frame 102.

In addition, the traveling motor 160, the gearbox 170, generator 120, and the like are disposed in the intermediate frame 102 of the lower frame 101.

The first frame 103 of the lower frame 101 is a frame disposed on the left side of the intermediate frame 102 of the lower frame 101, and the first battery 130 or the like is disposed therein.

The second frame 104 of the lower frame 101 is a frame disposed on the right side of the intermediate frame 102 of the lower frame 101, and the engine 110 or the like is disposed therein.

The engine 110 disposed in the second frame 104 of the lower frame 101 is used to drive the generator 120 to generate electricity in the generator 120. In the present disclosure, as an example, as the engine 110, a diesel engine may be used. However, without being limited thereto, a gasoline engine, a liquefied petroleum gas or a natural gas engine may also be used.

The generator 120 generates the electricity by driving the engine 110, and the electricity generated by generator 120 is supplied to inverter 121.

The inverter 121 converts an alternating current into a direct current from the electricity generated by the generator 120, and the electricity converted into the direct current by the inverter 121 is supplied to the first battery 130 and/or the second battery 210 through the first power distribution unit 140.

The first power distribution unit (PDU) 140 may supply the electricity converted into the alternating current by the inverter 121 to the first battery 130, or may supply the electricity converted into the alternating current by the inverter 121 to a second power distribution unit (PDU) 240 of the rotating platform 200 through a slip ring 220. In addition, the first power distribution unit (PDU) 140 may supply electric power from the first battery 130 and/or the second battery 210 to the traveling motor 160. The first power distribution unit (PDU) 140 may include a bus bar, a fuse, a relay, and the like. In addition, in the present disclosure, as illustrated in FIGS. 3 and 8, the charging port 195 is provided on the rear side of the lower traveling body 100, and an external power source may be supplied from the outside through the charging port 195, and the supplied external power source may be supplied to the first battery 130 and/or the second battery 210 through the first power distribution unit (PDU) 140.

The electricity generated by the generator 120 may be stored in the first battery 130 through the first power distribution unit (PDU) 140, and in addition, the external power source supplied through the charging port 195 may be stored in the first battery 130 through the first power distribution unit (PDU) 140.

The first battery 130 is disposed in the first frame 103 of the lower traveling body 100 in the present embodiment, and as an example, the first battery 130 may be a lithium-ion battery, but the configuration is not limited thereto.

The present disclosure may include a battery management system (BMS) which may check a charging status of the first battery 130.

The battery management system (BMS) may detect a power storage amount, that is, a potential, in various ways such as detecting remaining capacity (state of charge, SOC) and internal resistance varying depending on a temperature to estimate the potential. In this manner, when the remaining capacity of the first battery 130 is equal to or lower than a prescribed level, the engine 110 may be driven to generate the electricity in the generator 120, and the first battery 130 may be charged with the generated electricity.

The electric energy stored in the first battery 130 and the second battery 210 may be supplied to the first inverter 150 to drive the traveling motor 160 through the first power distribution unit (PDU) 140. The first battery 130 is disposed in the first frame 103 of the lower traveling body 100 in the present embodiment.

The first inverter 150 converts the electricity supplied from the first battery 130 and/or the second battery 210 from the direct current into the alternating current. The electricity converted into the alternating current by the first inverter 150 is supplied to the traveling motor 160.

The traveling motor 160 is used to drive the front and rear wheels 181 and 191 to drive the electric excavator 1000, and the traveling motor 160 is driven by the electricity supplied through the first inverter 150.

The gearbox 170 is connected to the traveling motor 160. Driving power of the traveling motor 160 is transmitted to the front axle 180 and the rear axle 180 and 190 through the gearbox 170, and is transmitted to the front wheels 181 and rear wheels 191 which are respectively disposed on both sides of the front axle 180 and the rear axle 190.

In the present embodiment, a case where the front and rear wheels 181 and 191 are driven by one traveling motor 160 has been described as an example, but each traveling motor 160 may be disposed to drive the front axle 180 and the rear axles 180 and 190.

The rotating platform 200 is disposed on an upper part of the lower traveling body 100, and is coupled to the lower traveling body 100 to be rotatable. The rotating platform 200 includes an upper frame 201, a cabin 202, the counterweight 203, the front working device 300, and the like.

As illustrated in FIGS. 2 and 4, the second battery 210, a slip ring slip ring, 220, a vehicle control unit (HCU/TCU) 230, a second power distribution unit 240, a converter 225, a second inverter 245, a rotating motor 250, a reduction gear 255, a third inverter 260, a working motor 270, a pump drive 280, a hydraulic pump 290, and the like are disposed inside the upper frame 201 of the rotating platform 200.

The slip ring 220 is used to supply the electric power between the lower traveling body 100 and the rotating platform 200, and serves to supply the electric power from the first power distribution unit (PDU) 140 to the second power distribution unit (PDU) 240 or from the second power distribution unit (PDU) 240 to the first power distribution unit (PDU) 140. The slip ring 220 may be disposed in a joint portion between the lower traveling body 100 and the rotating platform 200.

As illustrated in FIG. 4, the slip ring 220 may be disposed at a central portion of the rotating platform 200, and the rotating motor 250 may be disposed on the front side of the slip ring 220 and the rear side of the boom 310. In addition, the working motor 270 and the hydraulic pump 290 may be disposed on a right rear side of the rotating platform 200, and a hydraulic oil cooler 291 and a cooling fan 292 for cooling the hydraulic oil cooler 291 may be disposed on a right front side of the rotating platform 200.

The second power distribution unit (PDU) 240 may supply the electric power supplied from the first power distribution unit (PDU) 140 through the slip ring 220 to the second battery 210, or may supply the electric power of the second battery 210 to the first power distribution unit (PDU) 140 through the slip ring 220. In addition, the second power distribution unit (PDU) 240 may supply the electric power from the first battery 130 and/or the second battery 210 to the second inverter 245 for the rotating motor 250 and the third inverter 260 for the working motor 270. The second power distribution unit (PDU) 240 may include a busbar, a fuse, a relay, and the like. The second power distribution unit 240 may be disposed on the upper side of the second battery 210, and may be disposed between the second inverter 245 and the second battery 210.

Therefore, the electricity generated in the generator 120 may be stored in the second battery 210 through the first power distribution unit 140, the slip ring 220, and the second power distribution unit (PDU) 240, and in addition, the external power source supplied through the charging port 195 may be stored in the second battery 210 through the first power distribution unit 140, the slip ring 220, and the second power distribution unit (PDU) 240.

As an example, the second battery 210 may be a lithium-ion battery, but the configuration is not limited thereto. In the present embodiment, the second battery 210 may be disposed on the rear side of the cabin 202, and as illustrated in FIG. 4, the second battery 210 may be disposed to partially overlap the counterweight 203 in a plane when viewed from above. A portion of the second battery 210 may be disposed below the counterweight 203, and a portion of the second battery 210 may be disposed by being inserted into a recessed portion (groove or the like) on a front surface of the counterweight 203.

As in the first battery 130, the present disclosure may include a battery management system (BMS) which may check a charging status of the second battery 210.

The battery management system (BMS) may detect a power storage amount, that is, a potential, in various ways such as detecting remaining capacity (state of charge, SOC) and internal resistance varying depending on a temperature to estimate the potential. In this manner, when the remaining capacity of the second battery 210 is equal to or lower than a prescribed level, the engine 110 may be driven to generate the electricity in the generator 120, and the second battery 210 may be charged with the generated electricity.

The electric energy stored in the first battery 130 and the second battery 210 may be supplied to the second inverter 245 for driving the rotating motor 250 through the second power distribution unit (PDU) 240, and may be supplied to the third inverter 260 for driving the working motor 270.

The converter 225 is used to convert a voltage of the direct current power supplied from the first battery 130 and/or the second battery 210, and the converter 225 is a DC-DC converter. The converter 225 controls a voltage value of the direct current electricity supplied from the first battery 130 and/or the second battery 210 so that the voltage value is lower than a set value. For example, the converter 225 may reduce a voltage of 600 V to a voltage of 12 V.

The converter 225 may convert a voltage of the direct current supplied from the first battery 130 and/or the second battery 210, and may supply the converted electricity to the rotating motor 250, the working motor 270, or the traveling motor 160.

The second inverter 245 converts the electricity supplied through the second power distribution unit (PDU) 240 from the direct current to the alternating current. The electricity converted into the alternating current by the second inverter 245 is supplied to the rotating motor 250. As illustrated in FIG. 4, the second inverter 245 may be disposed in the upper portion of the second battery 210 on the rear side of the cabin 202, and may be disposed in the upper portion of the second power distribution unit 240.

The rotating motor 250 is used to rotate the rotating platform 200 on the lower traveling body 100, and the rotating motor 250 is driven by the electricity supplied through the second inverter 245.

A reduction gear 260 including multiple gears is connected to the rotating motor 250, and the rotating motor 160 rotates the rotating platform 200 through the reduction gear 260.

The third inverter 260 converts the electricity supplied through the second power distribution unit (PDU) 240 from the direct current to the alternating current. The electricity converted into the alternating current by the third inverter 260 is supplied to the working motor 270.

The working motor 270 is used to drive the hydraulic pump 290 for supplying the hydraulic oil to the front working device 300 including the boom 310, the arm 320, and the bucket 330, and the working motor 270 is driven by the electricity supplied through the third inverter 260.

The pump drive 280 including a gearbox is connected to the working motor 270, and the driving power of the working motor 270 is transmitted to the hydraulic pump 290 via the pump drive 280.

Therefore, the hydraulic pump 290 is driven by the working motor 270, and the hydraulic pump 290 supplies the hydraulic oil to each hydraulic actuator (not illustrated) for operating the boom 310, the arm 320, and the bucket 330 through a control valve. In this manner, the boom 310, the arm 320, and the bucket 330 of the front working device 300 are operated.

The vehicle control unit (HCU/TCU) 230 controls an overall operation of the excavator vehicle. As an example, the vehicle control unit (HCU/TCU) 230 controls the driving of the excavator vehicle in accordance with an operation of the driving lever, controls the rotation of the rotating platform in accordance with an operation of a rotating joystick, and controls operations of the boom 310, the arm 320, and the bucket 330 of the front working device 300 in accordance with an operation of an operating joystick of the front working device 300.

In the present disclosure, as illustrated in FIG. 2, when operation signals of the driving lever, the rotating joystick, and the like are input, a control signal is transmitted to the rotating motor 250, the traveling motor 160, the working motor 270, and the like through the second power distribution unit 240 to control the operations.

In the excavator in the related art illustrated in FIG. 1, the engine or the like has a structure disposed in the rotating platform 1, but in the present disclosure, as described above, components such as the engine 110 and the generator 120 are disposed in the lower traveling body 100. Therefore, the number of components disposed in the rotating platform 200 may be reduced, and a size of the rotating platform 200 may be reduced. In the present disclosure, since the number of components disposed in the rotating platform 200 and the size of the rotating platform 200 is reduced, energy required for rotating the rotating platform 200 may be reduced, and a field of vision of an operator may be widely secured during the work. Therefore, safety is improved.

Meanwhile, as an embodiment of the present disclosure, the engine 110 and the generator 120 are disposed in the lower traveling body 100, but as a pure battery electric excavator, the engine 110 and the generator 120 do not need to be disposed.

The present disclosure has the configuration as described above, and when the electric excavator of the present disclosure travels forward and rearward, the electric power is supplied from the first battery 130 and the second battery 210 to the traveling motor 160 through the first power distribution unit 140, and the driving power of the traveling motor 160 is transmitted to the front and rear wheels 181 and 191 through the gearbox 170. In this manner, the electric excavator may travel.

When the rotating platform 200 rotates, the electric power from the first battery 130 and the second battery 210 is supplied to the rotating motor 250 through the second power distribution unit 240, and the rotating platform 200 is rotated by driving the rotating motor 250.

In addition, during the work of the front working device 300, the electric power is supplied from the first battery 130 and the second battery 210 to the working motor 270 through the second power distribution unit 240, and the hydraulic pump 290 is driven by the working motor 270 to operate the boom 310, the arm 320, and the bucket 330 of the front working device 300.

In this way, when the traveling motor 160, the rotating motor 250, the working motor 270, and the like are operated, the first battery 130 disposed in the lower traveling body 100 and the second battery 210 disposed in the rotating platform 200 are connected in parallel. Therefore, the same capacity may be used for a load of electric power components.

In addition, when the remaining battery capacity of the first battery 130 and the second battery 210 is equal to or lower than a prescribed level, the generator 120 may be driven by the engine 110, and the first battery 130 and the second battery 210 may be charged by the generator 120. The first battery 130 and the second battery 210 may also be charged by an external power source through the charging port 195.

Meanwhile, FIGS. 2 to 4 illustrate an example of disposing a total of two batteries in a state where the first battery 130 is disposed in the lower traveling body 100 and the second battery 210 is disposed in the rotating platform 200. However, three or more batteries may be disposed. FIG. 5 illustrates an example in which an additional battery is disposed in the lower traveling body 100. An additional battery 130a may be disposed on the front side of the intermediate frame 102 of the lower frame 101 in the lower traveling body 100. In a case of a pure battery electric excavator without the engine 110 and the generator 120, as illustrated in the drawing, an additional battery 130b may be disposed in the second frame 104 to replace the engine 110.

In addition, FIG. 6 illustrates an example in which an additional battery is disposed in the rotating platform 200, and an additional battery 210a may be mounted on one surface of the second battery 210 in the upper frame 201 of the rotating platform 200.

Therefore, in addition to the first battery 130 and the second battery 210, three additional batteries 130a, 130b, and 210a may be mounted.

### 2. Battery Structure

FIG. 7 is a view illustrating an electric power supply line between the first and second batteries 130 and 210 disposed in the lower traveling body 100 and the rotating platform 200 in the present disclosure.

As illustrated in the drawing, in the present disclosure, each of positive terminals of the first battery 130, the first power distribution unit 140, the slip ring 220, the second power distribution unit 240, and the second battery 210 is connected to each of positive terminals, and each of negative terminals is connected to each of negative terminals.

The charging port 195 is connected to the first power distribution unit 140, the positive terminal of the charging port 195 is connected to the positive terminal of the first power distribution unit 140, and the negative terminal of the charging port 195 is connected to the negative terminal of the first power distribution unit 140.

In the present disclosure, the charging port 195 is disposed on the rear side of the intermediate frame 102 of the lower frame 101 in the lower traveling body 100. In this manner, charging may be performed while the rotating platform 200 is rotationally operated.

In this way, in the present disclosure, the positive terminal of the first battery 130 is connected to the positive terminal of the second battery 210, and the negative terminal of the first battery 130 is connected to the negative terminal of the second battery 210. Therefore, voltage levels of the two batteries may be matched, and charging may be performed by using a high-voltage charger through the charging port 195.

Specifically, during the charging, the first battery 130 and the second battery 210 are charged with the same current after being connected in parallel by using the first power distribution unit 140, the slip ring 220, and the second power distribution unit 240.

When used, the electric energy stored in the first and second batteries 130 and 210 connected in parallel is used with the same capacity.

For example, when a load of the electric power component of the excavator requests 100 kW, each 50 kW is supplied to the electric power components from the first and second batteries 130 and 210.

In addition, in the present disclosure, the first battery 130 is mounted on the lower traveling body 100, and the second battery 210 is mounted on the rotating platform 200. In this manner, battery capacity increases to enable high-load work for a long period of time, and structural stability of the excavator is improved.

### 3. Rotating Platform Structure

FIG. 8 is a rear view of the electric excavator according to the present disclosure. FIG. 9 is a front view of the electric excavator according to the present disclosure.

As described above, the rotating platform 200 includes the upper frame 201 in which the second battery 210, the second power distribution unit 240, the second inverter 245, the rotating motor 250, the third inverter 260, the working motor 270, the hydraulic pump 290, and the like are disposed, the cabin 202, the front working device 300, the counterweight 203, and the like.

The cabin 202 is an operation chamber of the excavator vehicle, and in the present embodiment, the cabin 202 is disposed at a position shifted leftward from the center of the rotating platform 200 on a plane. A driving lever (not illustrated) for controlling forward and backward traveling of the lower traveling body 100 and a joystick for operating the rotating platform 200 are provided inside the cabin 202. The joystick generally includes a joystick provided on the left side of the driver's seat to rotate the rotating platform 200 leftward and rightward, and a joystick provided on the right side of the driver's seat to operate the front working device 300.

In the present embodiment, an upper portion of the upper frame 201 located on the right side of the cabin 202 in a plan view or in a rear view of the rotating platform 200 has a first upper surface portion 201a adjacent to the cabin 202, and a second upper surface portion 201b disposed on the other side opposite to one side surface of the first upper surface portion adjacent to the cabin.

The second upper surface portion 201b is disposed on the right side of the first upper surface portion 201a in the present embodiment, may be connected to a right end portion of the first upper surface portion 201a, and may be disposed at a lower position than the first upper surface portion 201a in a stepwise manner. The reason is that electric power components such as the second battery 210 having a large volume are disposed in the first upper surface portion 201a or the counterweight 203. As illustrated in FIG. 4, in the present embodiment, the second battery 210, a second power control unit 240, the second inverter 245, the converter 225, the rotating motor 250, the slip ring 220, the third inverter 260, and the like may be disposed on a lower side of the first upper surface portion 201a in the upper frame 201, and the working motor 270, the hydraulic pump 290, the hydraulic oil cooler 291, and the like may be disposed on a lower side of the second upper surface portion 201b.

As another example, the second upper surface portion 201b may be formed as an inclined surface as in FIGS. 8 and 9 instead of being connected to the first upper surface portion 201a in a stepwise manner.

Therefore, the second upper surface portion 201b may have an inclined surface facing downward in a direction away from the cabin 202.

In this case, a starting point A of the second upper surface portion 201b connected to the first upper surface portion 201a in the rotating platform 200 is located between approximately 0 m to several m from a left side end of the cabin 201 in the front and a distance D to the starting point A of the second upper surface portion 201b in the cabin 201. The second upper surface portion 201b may be inclined downward in a direction away from the cabin 201, and may extend to an upper end edge of one side surface of the upper frame 201.

In the rotating platform 200, an angle θ formed between the second upper surface portion 201b and a horizontal line (line horizontally extending from one point of the cabin 201) is larger than 0 degrees and smaller than 90 degrees. As an example, a downward angle θ of the second upper surface portion 201b may be equal to or larger than 20 degrees and equal to or smaller than 70 degrees, or may be equal to or larger than 30 degrees and equal to or smaller than 60 degrees.

The downward inclination angle θ of the second upper surface portion 201b in the rotating platform 200 may be the same as the downward angle θ of the inclined surface portion 204b of the counterweight 203 (to be described later). As another example, the downward inclination angle θ of the second upper surface portion 201b in the rotating platform 200 may be larger than the downward angle θ of the inclined surface portion 204b of the counterweight 203.

The second upper surface portion 201b in the rotating platform 200 may be disposed on the same plane as the inclined surface portion 204b of the counterweight 203. That is, the second upper surface portion 201b in the rotating platform 200 may be disposed on a plane extending laterally from the inclined surface portion 204b of the counterweight 203. Therefore, as illustrated in FIG. 8, the second upper surface portion 201b in the rotating platform 200 may partially overlap the inclined surface portion 204b of the counterweight 203 in a rear view. In addition, as another example, the second upper surface portion 201b in the rotating platform 200 may be located below the inclined surface portion 204b of the counterweight 204 in the rear view.

In this way, in the present disclosure, the upper frame 201 located on the right side of the cabin 202 has the second upper surface portion 201b inclined downward. Therefore, as illustrated in FIGS. 8 and 9, an operator inside the cabin 202 can directly recognize hazardous materials or pedestrians located on the right side of the excavator vehicle. Therefore, safety may be ensured.

The counterweight 203 is a balancing load body disposed on the rear side of the rotating platform 200 to balance the weight, and serves to prevent the excavator vehicle from being tilted or overturned due to an excessive load applied to the front working device 300 disposed on the front side of the rotating platform 200 of the excavator during the work using the front working device 300.

In the present disclosure, the counterweight 203 includes an upper surface portion and a rear surface portion which are exposed outward. In the present embodiment, the second battery 210 may be disposed to partially overlap the counterweight 203 in a plane when viewed from above as illustrated in FIG. 4, and a portion of the second battery 210 may be mounted on the counterweight 203.

The upper surface portion 204 of the counterweight 203 has a flat surface portion 204a located on the rear side of the cabin 201, and an inclined surface portion 204b inclined downward in a direction away from the cabin 202 in one end of the flat surface portion 204a.

A starting point B of the inclined surface portion 204b connected to the flat surface portion 204a in the counterweight 203 is located between approximately 0 m and several m from a right side end of the cabin 202 in the rear view and the distance L to the starting point B of the inclined surface portion 204b in the cabin 201. The inclined surface portion 204b is inclined downward in the direction away from the cabin 201, and extends to an upper end edge of the right side surface of the upper frame 201.

In the present embodiment, the angle θ formed between the inclined surface portion 204b of the counterweight 203 and a horizontal line (line extending horizontally from one point on the horizontal cabin 201) is larger than 0 degrees and smaller than 90 degrees. As an example, the downward angle θ of the inclined surface portion 204b may be equal to or larger than 20 degrees and equal to or smaller than 70 degrees, equal to or larger than 30 degrees, or equal to or smaller than 60 degrees.

In this way, in addition to the second upper surface portion 201b of the upper frame 201, the counterweight 203 has the inclined surface portion 204b. In this manner, visibility is secured up to the right side rear wheel 191. Therefore, since a visibility angle on the right side surface is widened when the excavator moves rearward or travels on the road, safety is further ensured.

The rear surface portion 206 of the counterweight 203 is disposed on the rear surface of the upper surface portion 204, and has an arc shape formed in a rounded shape in a plan view as illustrated in FIG. 4.

The rear surface portion 206 of the counterweight 203 is formed to have a smaller width than an overall width of the rotating platform 200 of the electric excavator. Therefore, the width of the counterweight 203 is also formed to be smaller than the width of the rotating platform 200.

As described above, the present disclosure has been described with reference to the preferred embodiments, but the present disclosure is not limited to the above-described embodiments. Various modifications and corrections may be made by those skilled in the art to which the invention pertains within the scope that does not depart from the concept of the present disclosure.

### [INDUSTRIAL APPLICABILITY]

The present disclosure provides the electric excavator having an efficient layout and driven by the electrical energy.

## Claims

1. An electric excavator including a lower traveling body and a rotating platform coupled to the lower traveling body to be rotatable, the electric excavator comprising:
an engine disposed in the lower traveling body;
a generator disposed in the lower traveling body to generate electricity by using the engine;
a first battery disposed in the lower traveling body and charged by the generator;
a traveling motor disposed in the lower traveling body, to which a power source is supplied to move the lower traveling body;
a rotating motor disposed in the rotating platform to rotate the rotating platform; and a working motor disposed in the rotating platform to operate a front working device including a boom and an arm.

2. The electric excavator of claim 1, wherein the power source is supplied from the first battery to the rotating motor or the working motor.

3. The electric excavator of claim 1, further comprising:
a first power distribution unit disposed in the lower traveling body to supply electric power between the first battery and the traveling motor.

4. The electric excavator of claim 1, further comprising:
a front axle disposed on a front side of the lower traveling body;
front wheels disposed on both sides of the front axle;
a rear axle disposed on a rear side of the lower traveling body; and
rear wheels disposed on both sides of the rear axle,
wherein the front wheels and the rear wheels are rotated by driving power of the traveling motor.

5. The electric excavator of claim 1, further comprising:
a second battery disposed in the rotating platform.

6. The electric excavator of claim 1, further comprising:
a second power distribution unit disposed in the rotating platform to supply electric power to the rotating motor and the working motor.

7. The electric excavator of claim 6, further comprising:
a slip ring disposed between the first power distribution unit and the second power distribution unit to supply electric power between the first power distribution unit and the second power distribution unit.

8. The electric excavator of claim 1, further comprising:
a hydraulic pump disposed in the rotating platform and driven by the working motor.

9. The electric excavator of claim 1, further comprising:
a charging port for charging the first battery from an external power source.

10. The electric excavator of claim 9, further comprising:
a second battery disposed in the rotating platform,
wherein the first battery and the second battery are charged from the external power source by the charging port.

11. The electric excavator of claim 9, wherein the charging port is disposed in the lower traveling body.

12. The electric excavator of claim 1, further comprising:
an inclined surface portion disposed on the other side surface opposite to a cabin on the rotating platform and inclined in a direction away from the cabin.

13. The electric excavator of claim 12, further comprising:
a counterweight including an inclined surface portion disposed on a rear side of the rotating platform and inclined in the direction away from the cabin.

14. The electric excavator of claim 1, wherein the lower traveling body further includes a lower frame, the first battery is disposed on one side of the lower frame, and the engine is disposed on the other side opposite to the first battery in the lower frame.
